# EUROPÄISCHE PATENTSCHRIFT

(11) **EP 2 497 658 B1**
(45) Veröffentlichungstag und Bekanntmachung des Hinweises auf die Patenterteilung: **06.05.2015**
(21) Anmeldenummer: 12157999.9
(22) Anmeldetag: 04.03.2012
(51) Int. Cl.: B60D 1/62, B60D 1/06, B60D 1/30, B60D 1/58, B62D 13/02

(54) **Zugfahrzeug mit Fahrzeuganhänger**
Tractor with trailer
Véhicule de traction doté d'une remorque

(30) Priorität: 05.03.2011 DE 202011003521 U
(43) Veröffentlichungstag der Anmeldung: 12.09.2012
(73) Patentinhaber: Zunhammer, Sebastian, 83301 Traunreut (DE)
(72) Erfinder: Zunhammer, Sebastian, 83301 Traunreut (DE)
(74) Vertreter: Einsiedler, Johannes

(56) Entgegenhaltungen:
- EP-A1- 1 932 747
- EP-A1- 2 025 536
- EP-A1- 2 087 784
- EP-A2- 1 048 550
- WO-A1-2005/014369

## Beschreibung

Die Erfindung bezieht sich auf ein Zugfahrzeug mit Fahrzeuganhänger und auf eine Kugelkupplung zum ankoppeln eines Fahrzeuganhängers an ein Zugfahrzeug gemäß der Oberbegriffe der Ansprüche 1 und 11.

Derartige Fahrzeuganhänger sind bekannt. So offenbart beispielsweise die EP 2 025 536 A1 einen Anhänger mit einer Deichsel, einer mit einer Steuerung versehenen Lenkvorrichtung und einem mit der Steuerung verbundenen Sensor, mit dem der Winkel und/oder eine Veränderung des Winkels der Deichsellängsachse zur Längsachse eines Zugfahrzeugs ermittelbar ist. Um bei der Messung von Winkelstellungen den Einfluß von Störgrößen zu vermindern, wird vorgeschlagen, dass der Sensor ein Kraftübertragungsmittel aufweist, das an zwei in horizontaler Richtung zueinander beabstandeten ortsfesten Befestigungspunkten mit dem Zugfahrzeug verbindbar ist, der Sensor einen ortsfest mit der Deichsel verbundenen Meßpunkt aufweist, an dem mit einer Meßvorrichtung eine horizontale Lageveränderung einer Linie zwischen den genannten beabstandeten beiden Befestigungspunkten relativ zur Deichsellängsachse durch eine Auswertung der Bewegung des Kraftübertragungsmittels im Verhältnis zum Meßpunkt messbar ist, und der Meßpunkt abgestützt ist auf einem Lagerpunkt, der zumindest annähernd in der Wankachse der Deichsel angeordnet ist.

Bei bekannten lenkbaren Pendel-Tandemachsen ist der mechanische und hydraulische Aufwand erheblich, der Geradeauslauf unbefriedigend und die Sicherheit nicht unproblematisch.

Ein Vorschlag für die Verbesserung einer lenkbaren Tandemachse ist aus der DE 196 36 803 C1 bekannt. Die dort beschriebene Achse ist verhältnismäßig einfach aufgebaut und deren Geradeauslauf ist sowohl bei Vorwärts- als auch bei Rückwärtsfahrt sichergestellt. Der dort gezeigte Gegenstand verfügt über eine lenkbare Tandemachse mit einem mehrteiligen Lenkzylinder, dessen Lenkzylinder-Teile über ein Rückschlagventil mit einem Vorratsbehälter für Fluid verbunden sind. Die Lenkzylinder-Teile pumpen bei Lenkbewegungen Fluid aus einem Vorratsbehälter in ihre Zylinderräume, bis Selbstsperrung auftritt. Für Kurvenfahrten wird das Rückschlagventil durch ein Entsperrsignal entsperrt, welches von der Betätigung des Blinkers abhängig ist.

Aus der Druckschrift DE 10 2005 019 827 A1 ist es bekannt, die Kugelkupplung eines Fahrzeuggespanns mit einem Winkelsensor zu versehen. Der Winkelsensor,kann den Knickwinkel zwischen Zugfahrzeug und Fahrzeuganhänger ermitteln um daraus eine Eingangsgröße für die Fahrzeugsteuerung respektive Lenkung des Fahrzeuganhängers abzuleiten.

Aus der Literatur ist eine Vielzahl weiterer Lösungen dieses Problems bekannt.

Der bauliche Aufwand bei Vorrichtungen zur Ermittlung des genannten Knickwinkels ist beim Stand der Technik hoch.

Der Erfindung liegt demgegenüber die Aufgabe zugrunde, ein Zugfahrzeug mit Fahrzeuganhänger und lenkbarer Achse zu schaffen, bei dem die Ermittlung des Knickwinkels mit einer Vorrichtung von besonders einfacher Bauweise erfolgen soll, der dennoch alle Vorteile eines Zugfahrzeug mit Fahrzeuganhänger mit lenkbarer Achse bietet und bei dem die lenkbare Achse auch bei Rückwärtsfahrt des Gespanns lenkt.

Erfindungsgemäß wird diese Aufgabe durch Vorrichtungen mit den Merkmalen der Ansprüche 1 und 11 gelöst, wobei die Erfindung durch die Merkmale der abhängigen Ansprüche in vorteilhafter Weise ausgestaltet wird.

Die Vorteile der Erfindung liegen vor allem darin, dass durch die Übertragung der resultierenden Bewegung des Zugfahrzeuges gegenüber dem gezogenen Fahrzeug der Fahrzeuganhänger exakt dem Zügfahrzeug folgt, und dass die Übertragung dieser Relativbewegung durch ein einfaches Zug- und/oder Schubmittel mit Hilfe eines Sensors erfolgt. Reine Lenkbewegungen der gelenkten Achse des Zugfahrzeuges - wie etwa deren Lenkbewegungen während des Stillstandes - haben keinerlei Lenkbewegungen der erfindungsgemäß gelenkten Anhängerachse zur Folge. Dies ist reifenschonend und schont auch die Übertragungselemente der Lenkmechanik.

Erfindungsgemäß weist ein Zugfahrzeug mit Fahrzeuganhänger wenigstens einen Achskörper auf, an welchem der lenkbare Teil einer lenkbaren Achse lenkbar gelagert ist, ferner wenigstens einen Sensor zur Erfassung eines Knickwinkels zwischen der Längsachse des Zugfahrzeuges und der Längsachse des Fahrzeuganhängers, bei dem der lenkbare Teil der Achse um einen Winkel ausgelenkt wird, welcher dem Knickwinkel zwischen den Längsachsen der genannten Fahrzeuge proportional ist, wobei die Übertragung des Knickwinkels auf den Sensor durch Zug- und/oder Schubmittel erfolgt, deren Anlenkpunkte sich am Zugfahrzeug und am Fahrzeuganhänger außerhalb der gemeinsamen Längsachse von Zugfahrzeug und Fahrzeuganhänger befinden, welche mittels einer spielfreien Kupplung zusammen gekuppelt sind, wobei der Zugfahrzeugseitige Anlenkpunkt des Zug- und Schubmittels durch eine Anlenk-Vorrichtung gebildet wird, die verdrehfest an dem Zugfahrzeugseitigen Bauteil der spielfreien Kupplung angeordnet ist.

Des weiteren ist ein Zugfahrzeug mit Fahrzeuganhänger von Vorteil, wenn die Anlenk-Vorrichtung durch einen Anlenk-Hebel gebildet wird, der an einem Endbereich Mittel zur Aufnahme des Zug- und/oder Schubmittels aufweist, und dessen anderes Ende zur verdrehfesten Befestigung an der spielfreien Kupplung ausgebildet ist.

Dabei ist ein Zugfahrzeug mit Fahrzeuganhänger vorteilhaft, bei dem die spielfreie Kupplung als Aufnahmevorrichtung mit Kugelkopf und korrespondierendem Koppelelement mit Kugelaufnahme ausgebildet ist.

Erfindungsgemäß ist bei einem Zugfahrzeug mit Fahrzeuganhänger die AnlenkVorrichtung an einem Endbereich kreisringförmig ausgebildet wobei, die innere Freifläche des kreisringförmigen Endbereichs einen größeren Durchmesser aufweist, als der Durchmesser des Kugelkopfs der spielfreien Kupplung, wobei die Anlenk-Vorrichtung Mittel zu ihrer Befestigung an der Aufnahmevorrichtung mit Kugelkopf aufweist.

Besonders vorteilhaft ist ein Zugfahrzeug mit Fahrzeuganhänger wenn das Mittel zur Befestigung der Anlenk-Vorrichtung an der Aufnahmevorrichtung mit Kugelkopf durch eine Mutter/Schraube-Kombination gebildet wird, deren Justierspitze unter einem Winkel zur Ebene der Anlenk-Vorrichtung an einer zylindrischen Mantelfläche eines Flanschs der Aufnahmevorrichtung mit Kugelkopf angreift.

Bei einem Zugfahrzeug mit Fahrzeuganhänger ist es günstig, wenn der kreisförmig ausgebildete Endbereich der Anlenk-Vorrichtung einen radial verlaufenden Schlitz aufweist und die Grenzbereiche zum Schlitz zur Aufnahme einer Klemmvorrichtung ausgebildet sind, und wenn die Klemmvorrichtung durch eine Mutter/Schraube-Kombination realisiert ist.

Ein Zugfahrzeug mit Fahrzeuganhänger hat besondere Vorteile, wenn die Anlenk-Vorrichtung so ausgebildet ist, dass zumindest der Endbereich zur Aufnahme des Zugund/oder Schubmittels in einer Ebene liegt, die durch den Mittelpunkt des Kugelkopfes der Aufnahmevorrichtung mit Kugelkopf verläuft.

Es ist auch vorteilhaft, wenn bei dem Zugfahrzeug mit Fahrzeuganhänger die lenkbare Achse als Achsschenkel-Lenkachse ausgebildet ist, wenn die lenkbare Achse Bestandteil einer Tandem-Pendelachse ist, oder wenn die lenkbare Achse als Teil einer Tridemachse mit zwei Achsschenkel-Lenkachsen ausgebildet ist.

Darüber hinaus ist eine spielfreie Kupplung zum ankoppeln eines Fahrzeuganhängers an ein Zugfahrzeug vorteilhaft, wenn ein Sensor zur Ermittlung eines Knickwinkels zwischen der Längsachse des Zugfahrzeugs und der Längsachse des Fahrzeuganhängers vorhanden ist, wobei der Knickwinkel durch Zug- und/ Schubmittel auf den Sensor übertragen wird, und wenn die Anlenkpunkte des Zug- und/Schubmittels sich am Zugfahrzeug und am Fahrzeuganhänger außerhalb der gemeinsamen Längsachse von Zugfahrzeug und Fahrzeuganhänger befinden, und wenn der Zugfahrzeugseitige Anlenkpunkt des Zug- und Schubmittels durch eine Anlenk-Vorrichtung gebildet wird, die verdrehfest am Zugfahrzeugseitigen Teil der spielfreien Kupplung angeordnet ist.

Darüber hinaus ist es bei einer spielfreien Kupplung günstig, wenn der Zugfahrzeugseitige Teil der spielfreien Kupplung durch eine Aufnahmevorrichtung mit Kugelkopf gebildet wird.

Anhand von Ausführungsbeispielen wird die Erfindung mit Hilfe der Zeichnungen noch näher erläutert.

Es zeigt:
Figur 1 einen schematisch dargestellten Fahrzeuganhänger mit angedeutetem Zugfahrzeug;
Figur 2 einen Ausschnitt aus Figur 1 mit Kugelkupplung;
Figur 3 eine Kupplungskugel mit Anlenk-Vorrichtung;
Figur 4 eine Anlenk-Vorrichtung und
Figur 5 eine Variante einer Anlenk-Vorrichtung.

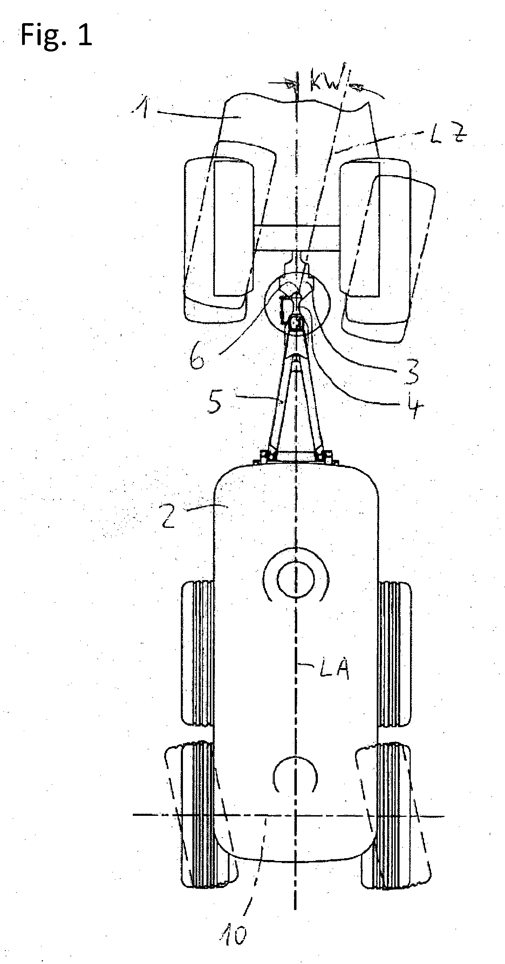

In Figur 1 ist stark schematisiert ein Zugfahrzeug 1 mit einem Fahrzeuganhänger 2 dargestellt. Das Zugfahrzeug 1 nimmt gegenüber dem Fahrzeuganhänger 2 einen Knickwinkel KW ein, der zwischen der Längsachse LZ des Zugfahrzeuges 1 und der Längsachse LA des Fahrzeuganhängers 2 gebildet wird. Das Zugfahrzeug 1 ist mit einer Aufnahmevorrichtung mit Kugelkopf 3 ausgestattet, welcher ein Koppelelement mit Kugelaufnahme 4 an einer Deichsel 5 des Fahrzeuganhängers 2 aufnimmt und mit diesem eine spielfreie Kupplung 6 bildet. Aufnahmevorrichtung 3 und Koppelelement 4 können durch eine beliebige Art von Kupplung zwischen zwei Fahrzeugen realisiert sein, solange die Bedingung erfüllt wird, dass die Kupplung 6 spielfrei ist.

Da es von entscheidender Bedeutung ist, dass die Kupplung 6 zwischen dem Zugfahrzeug 1 und dem Fahrzeuganhänger 2 spielfrei ist, damit eine hinreichende Lenkpräzision resultiert, kann die Kupplung 6 in Form von unterschiedlichen Kugelkupplungen ausgeführt sein.

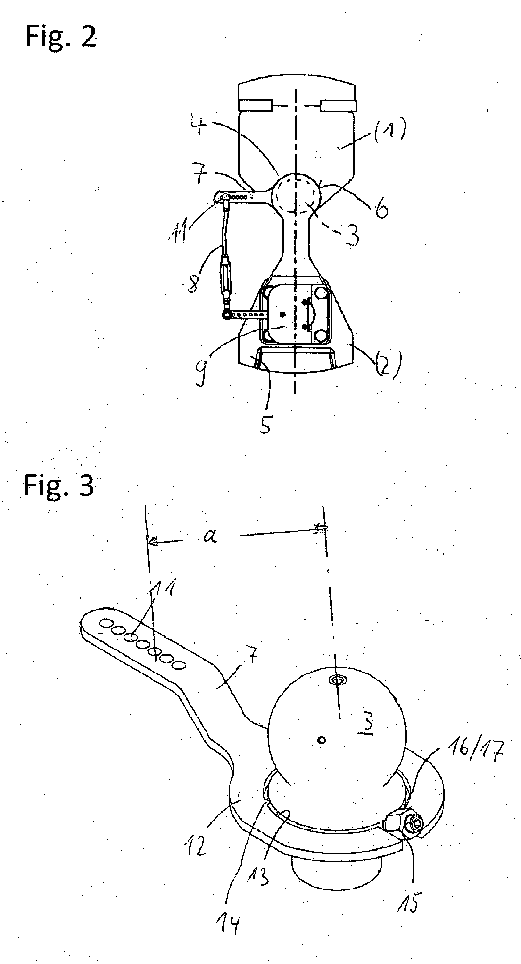

In Figur 2 ist eine Kupplung 6 dargestellt, bei der an der Deichsel 5 des Fahrzeuganhängers 2 als Koppelelement eine Kugelaufnahme 4 montiert ist, während sich am Zugfahrzeug 1 eine Aufnahmevorrichtung mit korrespondierendem Kugelkopf 3 befindet. Es versteht sich, dass weitere Variationen einer spielfreien Kupplung möglich sind, beispielsweise können Kompensationselemente für eine spielbehaftete Klauen- und Ösen-Kupplung vorgesehen werden.

Dort ist des weiteren gezeigt, dass das Zugfahrzeug 1 über eine Anlenk-Vorrichtung 7 verfügt, mit welcher durch ein dort angelenktes Zug- und/oder Schubmittel 8 Veränderungen des Knickwinkels KW zwischen Zugfahrzeug 1 und Fahrzeuganhänger 2 auf einen Sensor 9 übertragen werden. Der Sensor 9 befindet sich vorzugsweise auf der Deichsel 5 und generiert Lenkinformationen aus dem Knickwinkel KW zwischen der Längsachse LZ des Zugfahrzeuges 1 und der Längsachse LA des Fahrzeuganhängers. Diese Lenkinformationen werden mit Hilfe eines Soll-/Istwert-Vergleichs in an sich bekannter Weise zur Steuerung des entsprechenden Einschlags der lenkbaren Achse 10 des Fahrzeuganhängers 2 verwendet.

Wesentlich ist beim vorliegenden Gegenstand, dass der Knickwinkel KW direkt durch das Zug- und/oder Schubmittel 8 übertragen wird, dessen eines Ende an einem Anlenkpunkt 11 an der Anlenk-Vorrichtung 7 befestigt ist, welcher sich in einem definierten Abstand "a" vom Drehpunkt D am Kugelkopf 3 befindet. Die Lenkinformation wird demgemäß aus der realen Knickbewegung abgeleitet, die zwischen dem Zugfahrzeug 1 und dem Fahrzeuganhänger 2 stattfindet. Ein Maß für die Lenkinformation ist danach ein Knickwinkel KW, der sich zwischen der Längsachse LZ des Zugfahrzeuges 1 und der Längsachse LA des Fahrzeuganhängers 2 einstellt. Dieser direkte Abgriff der Lenkinformation aus der Winkelkonstellation zwischen dem Zugfahrzeug 1 und dem Fahrzeuganhänger 2 hat besondere Vorteile, denn Lenkbewegungen der Lenkachse des Zugfahrzeugs 1 gehen erst in Lenkbewegungen der Lenkachse 10 des Fahrzeuganhängers 2 ein, wenn tatsächlich eine Richtungsänderung des Fahrzeuggespannes 1 und 2 stattfindet. Lenkausschläge im Stillstand des Zugfahrzeuges 1 schlagen sich nicht in Lenkbewegungen der Lenkachse 10 des Fahrzeuganhängers 2 nieder. Dies schont die Lenkmechanik der lenkbaren Achse 10 des Fahrzeuganhängers 2 und dessen Reifen.

Damit der Sollwert der Lenkbewegung der Lenkachse 10 immer proportional dem Istwert des Knickwinkels KW zwischen dem Zugfahrzeug 1 und dem Fahrzeuganhänger 2 ist, erfolgt die Nachführung der Lenkbewegung der Lenkachse 10 bis zu einer selbsttätigen Begrenzung des Lenkausschlages durch ein an sich bekanntes und daher nicht näher bezeichnetes Sicherheitselement. Das Sicherheitselement bewirkt, dass die Lenkachse 10 nur bis auf ihren Sollwert nachgeführt werden kann.

In Figur 3 ist eine Anlenk-Vorrichtung 7 in montiertem Zustand an der Aufnahmevorrichtung mit Kugelkopf 3 dargestellt. Die Anlenk-Vorrichtung 7 weist eine Reihe von Bohrungen auf, die wahlweise als Anlenkpunkte 11 zur Befestigung des Zug- und/oder Schubmittels 8 dienen und die korrekte Einstellung des Abstands "a" zum Drehpunkt D am Kugelkopf 3 ermöglichen. Am gegenüber liegenden Endbereich weitet sich die Anlenk-Vorrichtung 7 zu einem Kreisring 12 auf, in dessen innere Freifläche 13 wenigstens zwei voneinander beabstandete Dornen 14 hinein ragen. Den Dornen 14 gegenüber liegend weist der Kreisring 12 eine Mutter/Schraube-Kombination 15 auf, welche sowohl zur Fixierung als auch der Justierung der Anlenk-Vorrichtung 7 an der Aufnahmevorrichtung mit Kugelkopf 3 dient. Der innere Durchmesser des Kreisrings 12 ist geringfügig größer als der Durchmesser des Kugelkopfs 3, so dass die Anlenk-Vorrichtung 7 zu ihrer Montage über den Kugelkopf 3 geführt werden kann. Der Kugelkopf 3 der Aufnahmevorrichtung weist einen Flansch 16 mit einer nicht näher bezeichneten Montagefläche für die Montage am Zugfahrzeug 1 auf. Der zylindrische Mantel 17 des Flanschs 16 korrespondiert mit der inneren Freifläche 13 der Anlenk-Vorrichtung 7 derart, dass die Dornen 14 des Kreisrings 12 bei der Befestigung der Anlenk-Vorrichtung 7 an dem zylindrischen Mantel 17 anliegen und mittels der Mutter/Schraube-Kombination 15 an diesem fixiert und justiert werden können.

Durch diese einfache Anlenk-Vorrichtung 7 und deren besonders einfache Montage an der Aufnahmevorrichtung mit Kugelkopf 3 ist eine sichere und präzise Anlenkung des Zug- und/oder Schubmittels 8 zur Ermittlung und Übertragung des Knickwinkels KW zwischen Zugfahrzeug 1 und Fahrzeuganhänger 2 auf den Sensor 9 möglich.

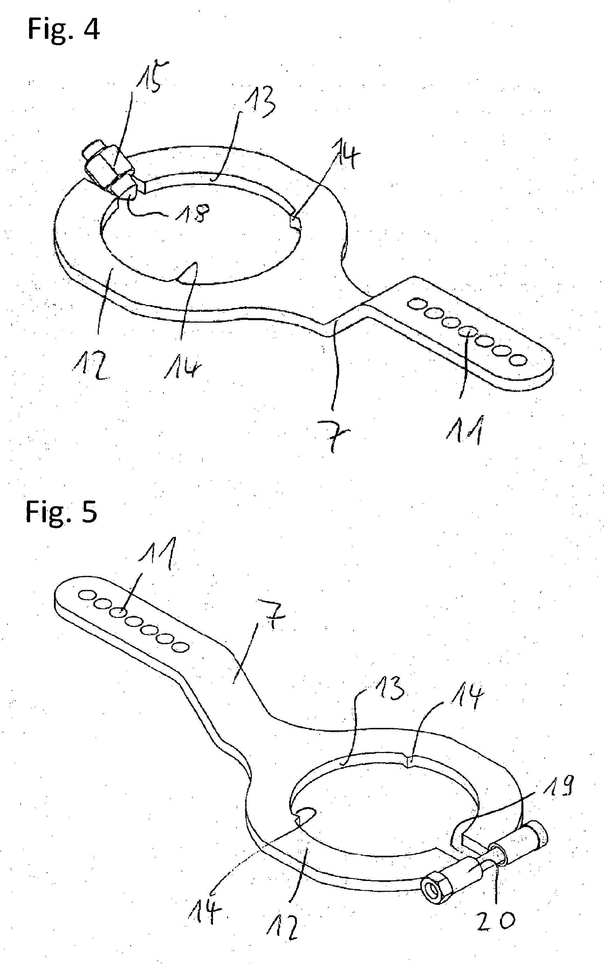

In Figur 4 ist eine Anlenk-Vorrichtung7 in Alleinstellung gezeigt. Der eine Endbereich trägt die Bohrungen für die möglichen Anlenkpunkte 11. Eine Kröpfung der Anlenk-Vorrichtung 7 dient dazu, die Ebene der Anlenkpunkte 11 in die Ebene durch den Mittelpunkt des in den vorstehenden Figuren dargestellten Kugelkopfs 3 zu verlagern, damit Wank- und Kippbewegungen der Deichsel 5 des Fahrzeuganhängers 2 nicht zu Fehlern bei der Ermittlung des Knickwinkels KW führen. Der den Bohrungen für die Anlenkpunkte 11 gegenüber liegende Endbereich der Anlenk-Vorrichtung 7 ist derart aufgeweitet, das dieser Endbereich im Wesentlichen zu einem Kreisring 12 geformt ist. Der Kreisring 12 bildet eine Freifläche 13 in die Dornen 14 hinein ragen. Den Dornen 14 gegenüber liegend befindet sich eine Mutter/Schraube-Kombination 15. Dabei ist die Schraube der Mutter/Schraube-Kombination 15 mit einer Justierspitze 18 versehen, durch welche die Anlenk-Vorrichtung 7 am Flansch 16 und dessen zylindrischer Mantelfläche 17 gleichzeitig befestigt und in ihrer Position präzise justiert werden kann. Die Bauform der Mutter/Schraube-Kombination 15 kann in ihrer Ausgestaltung auch anders gewählt werden. Ein Beispiel für eine Variante einer Anlenk-Vorrichtung 7 ist schematisch in Figur 5 dargestellt. Abweichend von den vorbeschriebenen Ausführungsbeispielen weist bei dieser Ausführungsform der Kreisring 12 einen radialen Schlitz 19 auf. Eine anders gestaltete Mutter/Schraube-Kombination 20 bewirkt zusammen mit dem geschlitzten Kreisring 12 eine Klemmung der Anlenk-Vorrichtung 7 an der zylindrischen Mantelfläche 17 des Flanschs 16.

Analog zu den bisher erläuterten Ausführungsbeispielen sei auch noch erwähnt, dass die Erfindung auch bei Fahrzeuganhängern mit Tridemachse vorteilhaft eingesetzt werden kann. Von den drei Achsen eines mit Tridemachse ausgerüsteten Anhängers können zwei als Lenkachsen ausgebildet sein. Für diese Lenkachsen gelten in analoger Weise die Ausführungen zu den Figuren 1 und 2. Selbstverständlich müssen für jede der Lenkachsen die Sicherheitselemente bzw. Vorrichtungen vorhanden sein. Die Wirkungsweise der Lenkungen entspricht sinngemäß den Ausführungen, die für die anderen Ausführungsbeispiele bereits gemacht wurden.

### Bezugszeichenliste

- 1: Zugfahrzeug
- 2: Fahrzeuganhänger
- 3: Aufnahmevorrichtung mit Kugelkopf
- 4: Koppelelement mit Kugelaufnahme
- 5: Deichsel
- 6: Spielfreie Kupplung
- 7: Anlenk-Vorrichtung
- 8: Zug- und/Schubmittel
- 9: Sensor
- 10: Lenkbare Achse
- 11: Anlenkpunkt
- 12: Kreisring
- 13: Freifläche
- 14: Dornen
- 15: Mutter/Schraube-Kombination
- 16: Flansch
- 17: Zylindrischer Mantel
- 18: Justierspitze
- 19: Schlitz
- 20: Mutter/Schraube-Kombination
- KW: Knickwinkel
- LA: Längsachse Fahrzeuganhänger
- LZ: Längsachse Zugfahrzeug
- D: Drehpunkt
- a: Abstand

## Patentansprüche

1. Zugfahrzeug (1) mit Fahrzeuganhänger (2), der wenigstens einen Achskörper aufweist, an welchem der lenkbare Teil einer lenkbaren Achse (10) lenkbar gelagert ist und mit wenigstens einem Sensor (9) zur Erfassung eines Knickwinkels (KW) zwischen der Längsachse (LZ) des Zugfahrzeuges (1) und der Längsachse (LA) des Fahrzeuganhängers (2), bei dem der lenkbare Teil der Achse (10) um einen Winkel (WA) ausgelenkt wird, welcher dem Knickwinkel (KW) zwischen den Längsachsen (LZ, LA) der genannten Fahrzeuge (1, 2) proportional ist, wobei die Übertragung des Knickwinkels (KW) auf den Sensor (9) durch Zug- und/oder Schubmittel (8) erfolgt, deren Anlenkpunkte (11) sich am Zugfahrzeug (1) und am Fahrzeuganhänger (2) außerhalb der gemeinsamen Längsachse (LZ, LA) von Zugfahrzeug (1) und Fahrzeuganhänger (2) befinden, welche mittels einer spielfreien Kupplung (6) zusammen gekuppelt sind, wobei der zugfahrzeugseitige Anlenkpunkt (11) des Zug- und Schubmittels (8) durch eine Anlenk-Vorrichtung (7) gebildet wird, die verdrehfest an dem Zugfahrzeugseitigen Bauteil (3) der spielfreien Kupplung (6) angeordnet ist, **dadurch gekennzeichnet, dass** die Anlenk-Vorrichtung (7) an einem Endbereich (12) kreisringförmig ausgebildet ist, wobei die innere Freifläche (13) des kreisringförmigen Endbereichs (12) einen größeren Durchmesser aufweist, als der Durchmesser des Kugelkopfs (3) der spielfreien Kupplung (6), und dass die Anlenk-Vorrichtung (7) Mittel (14, 15, 20) zu ihrer Befestigung an der Aufnahmevorrichtung mit Kugelkopf (3) aufweist.

2. Zugfahrzeug (1) mit Fahrzeuganhänger (2) nach Anspruch 1, **dadu**r**ch gekenn-zeichnet,** dass die Anlenk-Vorrichtung (7) durch einen Anlenk-Hebel gebildet wird, der an einem Endbereich Mittel zur Aufnahme des Zug- und/oder Schubmittels (8) aufweist, und dessen anderes Ende (12) zur verdrehfesten Befestigung an der spielfreien Kupplung (6) ausgebildet ist.

3. Zugfahrzeug (1) mit Fahrzeuganhänger (2) nach Anspruch 1, **dadurch gekennzeichnet, dass** die spielfreie Kupplung (6) als Aufnahmevorrichtung mit Kugelkopf (3) und korrespondierendem Koppelelement mit Kugelaufnahme (4) ausgebildet ist.

4. Zugfahrzeug (1) mit Fahrzeuganhänger (2) nach einem der vorstehenden Ansprüche, **dadurch gekennzeichnet, dass** das Mittel zur Befestigung der Anlenk-Vorrichtung (7) an der Aufnahmevorrichtung mit Kugelkopf (3) durch eine Mutter/Schraube-Kombination (15) gebildet wird, deren Justierspitze (18) unter einem Winkel zur Ebene der Anlenk-Vorrichtung (7) an einer zylindrischen Mantelfläche (17) eines Flanschs (16) der Aufnahmevorrichtung mit Kugelkopf (3) angreift.

5. Zugfahrzeug (1) mit Fahrzeuganhänger (2) nach einem der vorstehenden Ansprüche, **dadurch gekennzeichnet, dass** der kreisförmig ausgebildete Endbereich (12) der Anlenk-Vorrichtung (7) einen radial verlaufenden Schlitz (19) aufweist und die Grenzbereiche zum Schlitz (19) zur Aufnahme einer Klemmvorrichtung (20) ausgebildet sind.

6. Zugfahrzeug (1) mit Fahrzeuganhänger (2) nach Anspruch 5, **dadurch gekennzeichnet, dass** die Klemmvorrichtung durch eine Mutter/Schraube-Kombination (20) realisiert ist.

7. Zugfahrzeug (1) mit Fahrzeuganhänger (2) nach Anspruch 1, **dadurch gekennzeichnet, dass** die Anlenk-Vorrichtung (7) so ausgebildet ist, dass zumindest der Endbereich (11) zur Aufnahme des Zug- und/oder Schubmittels (8) in einer Ebene liegt, die durch den Mittelpunkt des Kugelkopfes (3) der Aufnahmevorrichtung mit Kugelkopf (3) verläuft.

8. Zugfahrzeug (1) mit Fahrzeuganhänger (2) nach Anspruch 1, **dadurch gekennzeichnet, dass** die lenkbare Achse (10) als Achsschenkel-Lenkachse ausgebildet ist.

9. Zugfahrzeug (1) mit Fahrzeuganhänger (2) nach Anspruch 1, **dadurch gekennzeichnet, dass** die lenkbare Achse (10) Bestandteil einer Tandem-Pendelachse ist.

10. Zugfahrzeug (1) mit Fahrzeuganhänger (2) nach Anspruch 1, **dadurch gekennzeichnet, dass** die lenkbare Achse (10) als Teil einer Tridemachse mit zwei Achsschenkel-Lenkachsen ausgebildet ist.

11. Spielfreie Kupplung zum Ankoppeln eines Fahrzeuganhängers (2) an ein Zugfahrzeug (1), bei der ein Sensor (9) zur Ermittlung eines Knickwinkels (KW) zwischen der Längsachse (LZ) des Zugfahrzeugs (1) und der Längsachse (LA) des Fahrzeuganhängers (2) vorhanden ist, wobei der Knickwinkel (KW) durch Zug- und/ Schubmittel (8) auf den Sensor (9) übertragen wird, und bei der die Anlenkpunkte (11) des Zug- und/ Schubmittels (8) sich am Zugfahrzeug (1) und am Fahrzeuganhänger (2) außerhalb der gemeinsamen Längsachse (LZ, LA) von Zugfahrzeug (1) und Fahrzeuganhänger (2) befinden, wobei der zugfahrzeugseitige Anlenkpunkt des Zug- und Schubmittels (11) durch eine Anlenk-Vorrichtung (7) gebildet wird, die verdrehfest am zugfahrzeugseitigen Teil (3) der spielfreien Kupplung (6) angeordnet ist, und wobei der zugfahrzeugseitige Teil der spielfreien Kupplung (6) durch eine Aufnahmevorrichtung mit Kugelkopf (3) gebildet wird, **dadurch gekennzeichnet, dass** die Anlenk-Vorrichtung (7) an einem Endbereich (12) kreisringförmig ausgebildet ist, wobei die innere Freifläche (13) des kreisringförmigen Endbereichs (12) einen größeren Durchmesser aufweist, als der Durchmesser des Kugelkopfs (3) der spielfreien Kupplung (6), und dass die Anlenk-Vorrichtung (7) Mittel (14, 15, 20) zu ihrer Befestigung an der Aufnahmevorrichtung mit Kugelkopf (3) aufweist.

## Claims

1. Tractor (1) with a vehicle trailer (2) which has at least one axle body on which the steerable part of a steerable axle (10) is steerably mounted, and with at least one sensor (9) for sensing an articulation angle (KW) between the longitudinal axis (LZ) of the tractor (1) and the longitudinal axis (LA) of the vehicle trailer (2), in which the steerable part of the axle (10) is deflected by an angle (WA) which is proportional to the articulation angle (KW) between the longitudinal axes (LZ, LA) of the vehicles (1, 2) mentioned, wherein the articulation angle (KW) is transmitted to the sensor (9) by pull and/or push means (8), the coupling points (11) of which are located on the tractor (1) and on the vehicle trailer (2) outside the common longitudinal axis (LZ, LA) of tractor (1) and vehicle trailer (2), which tractor and vehicle trailer are coupled together by means of a play-free coupling (6), wherein the tractor-side coupling point (11) of the pull and push means (8) is formed by a coupling device (7) which is arranged in a rotationally fixed manner on the tractor-side component (3) of the play-free coupling (6), **characterized in that** the coupling device (7) is of circular-ring-shaped design at one end region (12), wherein the inner free surface (13) of the circular-ring-shaped end region (12) has a larger diameter than the diameter of the ball head (3) of the play-free coupling (6), and **in that** the coupling device (7) has means (14, 15, 20) for the fastening thereof to the receiving device with the ball head (3).

2. Tractor (1) with a vehicle trailer (2) according to Claim 1, **characterized in that** the coupling device (7) is formed by a coupling lever which has means for receiving the pull and/or push means (8) at one end region, and the other end (12) of which is designed for the rotationally fixed fastening to the play-free coupling (6).

3. Tractor (1) with a vehicle trailer (2) according to Claim 1, **characterized in that** the play-free coupling (6) is designed as the receiving device with the ball head (3) and with a corresponding coupling element with a ball socket (4).

4. Tractor (1) with a vehicle trailer (2) according to one of the preceding claims, **characterized in that** the means for fastening the coupling device (7) to the receiving device with the ball head (3) is formed by a nut/screw combination (15), the adjustment point (18) of which acts on a cylindrical lateral surface (17) of a flange (16) of the receiving device with the ball head (3) at an angle to the plane of the coupling device (7).

5. Tractor (1) with a vehicle trailer (2) according to one of the preceding claims, **characterized in that** the end region (12) of the coupling device (7) which is of circular design has a radially running slot (19), and the boundary regions with respect to the slot (19) are designed for receiving a clamping device (20).

6. Tractor (1) with a vehicle trailer (2) according to Claim 5, **characterized in that** the clamping device is realized by a nut/screw combination (20).

7. Tractor (1) with a vehicle trailer (2) according to Claim 1, **characterized in that** the coupling device (7) is designed in such a manner that at least the end region (11) for receiving the pull and/or push means (8) lies in a plane which runs through the centre point of the ball head (3) of the receiving device with the ball head (3).

8. Tractor (1) with a vehicle trailer (2) according to Claim 1, **characterized in that** the steerable axle (10) is designed as a kingpin steering axle.

9. Tractor (1) with a vehicle trailer (2) according to Claim 1, **characterized in that** the steerable axle (10) is part of a tandem swinging axle.

10. Tractor (1) with a vehicle trailer (2) according to Claim 1, **characterized in that** the steerable axle (10) is designed as part of a triple axle with two kingpin steering axles.

11. Play-free coupling for coupling a vehicle trailer (2) to a tractor (1), in which there is a sensor (9) for determining an articulation angle (KW) between the longitudinal axis (LZ) of the tractor (1) and the longitudinal axis (LA) of the vehicle trailer (2), wherein the articulation angle (KW) is transmitted to the sensor (9) by pull and/or push means (8), and in which the coupling points (11) of the pull and/or push means (8) are located on the tractor (1) and on the vehicle trailer (2) outside the common longitudinal axis (LZ, LA) of tractor (1) and vehicle trailer (2), wherein the tractor-side coupling point of the pull and push means (11) is formed by a coupling device (7) which is arranged in a rotationally fixed manner on the tractor-side part (3) of the play-free coupling (6), and wherein the tractor-side part of the play-free coupling (6) is formed by a receiving device with a ball head (3), **characterized in that** the coupling device (7) is of circular-ring-shaped design at one end region (12), wherein the inner free surface (13) of the circular-ring-shaped end region (12) has a larger diameter than the diameter of the ball head (3) of the play-free coupling (6), and **in that** the coupling device (7) has means (14, 15, 20) for the fastening thereof to the receiving device with the ball head (3).

## Revendications

1. Véhicule tracteur (1) avec une remorque (2) qui présente au moins un corps d'essieu sur lequel est supportée de manière articulée la partie dirigeable d'un essieu directeur (10) et comprenant au moins un capteur (9) pour détecter un angle d'inflexion (KW) entre l'axe longitudinal (LZ) du véhicule tracteur (1) et l'axe longitudinal (LA) de la remorque (2), dans lequel la partie dirigeable de l'essieu (10) est déviée d'un angle (WA) qui est proportionnel à l'angle d'inflexion (KW) entre les axes longitudinaux (LZ, LA) desdits véhicules (1, 2), la transmission de l'angle d'inflexion (KW) au capteur (9) s'effectuant par des moyens de traction et/ou de poussée (8) dont les points d'articulation (11) se trouvent sur le véhicule tracteur (1) et sur la remorque (2) à l'extérieur de l'axe longitudinal commun (LZ, LA) du véhicule tracteur (1) et de la remorque (2), lesquels sont accouplés l'un à l'autre au moyen d'un accouplement sans jeu (6), le point d'articulation (11) du côté du véhicule tracteur du moyen de traction et de poussée (8) étant formé par un dispositif d'articulation (7) qui est disposé de manière solidaire en rotation sur le composant (3) de l'accouplement sans jeu (6) du côté du véhicule tracteur, **caractérisé en ce que** le dispositif d'articulation (7) est réalisé sous forme annulaire circulaire au niveau d'une région d'extrémité (12), la surface libre intérieure (13) de la région d'extrémité de forme annulaire circulaire (12) présentant un plus grand diamètre que le diamètre de la tête sphérique (3) de l'accouplement sans jeu (6), et **en ce que** le dispositif d'articulation (7) présente des moyens (14, 15, 20) pour sa fixation au niveau du dispositif de réception à tête sphérique (3).

2. Véhicule tracteur (1) avec une remorque (2) selon la revendication 1, **caractérisé en ce que** le dispositif d'articulation (7) est formé par un levier d'articulation qui présente au niveau d'une région d'extrémité des moyens pour recevoir le moyen de traction et/ou de poussée (8), et dont l'autre extrémité (12) est réalisée pour la fixation solidaire en rotation à l'accouplement sans jeu (6).

3. Véhicule tracteur (1) avec une remorque (2) selon la revendication 1, **caractérisé en ce que** l'accouplement sans jeu (6) est réalisé sous forme de dispositif de réception à tête sphérique (3) et avec un élément d'accouplement correspondant avec logement sphérique (4).

4. Véhicule tracteur (1) avec une remorque (2) selon l'une quelconque des revendications précédentes, **caractérisé en ce que** le moyen pour la fixation du dispositif d'articulation (7) au dispositif de réception à tête sphérique (3) est formé par une combinaison écrou/vis (15) dont la pointe d'ajustement (18) vient en prise suivant un certain angle par rapport au plan du dispositif d'articulation (7) au niveau d'une surface d'enveloppe cylindrique (17) d'une bride (16) du dispositif de réception à tête sphérique (3).

5. Véhicule tracteur (1) avec une remorque (2) selon l'une quelconque des revendications précédentes, **caractérisé en ce que** la région d'extrémité (12) réalisée sous forme circulaire du dispositif d'articulation (7) présente une fente s'étendant radialement (19) et les régions limites de la fente (19) sont réalisées pour recevoir un dispositif de serrage (20).

6. Véhicule tracteur (1) avec une remorque (2) selon la revendication 5, **caractérisé en ce que** le dispositif de serrage est réalisé par une combinaison écrou/vis (20).

7. Véhicule tracteur (1) avec une remorque (2) selon la revendication 1, **caractérisé en ce que** le dispositif d'articulation (7) est réalisé de telle sorte qu'au moins la région d'extrémité (11) pour recevoir le moyen de traction et/ou de poussée (8) soit située dans un plan qui s'étend à travers le centre de la tête sphérique (3) du dispositif de réception à tête sphérique (3).

8. Véhicule tracteur (1) avec une remorque (2) selon la revendication 1, **caractérisé en ce que** l'essieu directeur (10) est réalisé sous forme d'un essieu directeur à fusée d'essieu.

9. Véhicule tracteur (1) avec une remorque (2) selon la revendication 1, **caractérisé en ce que** l'essieu directeur (10) fait partie d'un essieu oscillant en tandem.

10. Véhicule tracteur (1) avec une remorque (2) selon la revendication 1, **caractérisé en ce que** l'essieu directeur (10) est réalisé en tant que partie d'un essieu tridem avec deux essieux directeurs à fusée d'essieu.

11. Accouplement sans jeu pour atteler une remorque (2) à un véhicule tracteur (1) dans lequel un capteur (9) est prévu pour déterminer un angle d'inflexion (KW) entre l'axe longitudinal (LZ) du véhicule tracteur (1) et l'axe longitudinal (LA) de la remorque (2), l'angle d'inflexion (KW) étant transmis par des moyens de traction et/ou de poussée (8) au capteur (9), et dans lequel les points d'articulation (11) du moyen de traction et/ou de poussée (8) se trouvent sur le véhicule tracteur (1) et sur la remorque (2) à l'extérieur de l'axe longitudinal commun (LZ, LA) du véhicule tracteur (1) et de la remorque (2), le point d'articulation du côté du véhicule tracteur des moyens de traction et de poussée (11) étant formé par un dispositif d'articulation (7) qui est disposé de manière solidaire en rotation sur la partie (3) de l'accouplement sans jeu (6) du côté du véhicule tracteur, et la partie de l'accouplement sans jeu (6) du côté du véhicule tracteur étant formée par un dispositif de réception à tête sphérique (3), **caractérisé en ce que** le dispositif d'articulation (7) est réalisé sous forme annulaire circulaire au niveau d'une région d'extrémité (12), la surface libre intérieure (13) de la région d'extrémité de forme annulaire circulaire (12) présentant un plus grand diamètre que le diamètre de la tête sphérique (3) de l'accouplement sans jeu (6), et **en ce que** le dispositif d'articulation (7) présente des moyens (14, 15, 20) pour sa fixation au niveau du dispositif de réception à tête sphérique (3).
